# EUROPÄISCHE PATENTSCHRIFT

(11) **EP 0 736 429 B1**
(45) Veröffentlichungstag und Bekanntmachung des Hinweises auf die Patenterteilung: **08.02.2006**
(21) Anmeldenummer: 96104512.7
(22) Anmeldetag: 21.03.1996
(51) Int. Cl.: B60T 8/36

(54) **Hydraulikaggregrat für eine blockiergeschützte Fahrzeugbremsanlage**
Hydraulic unit for an anti-lock brake system
Unité hydraulique pour système de freinage antiblocage

(30) Priorität: 05.04.1995 DE 19512804
(43) Veröffentlichungstag der Anmeldung: 09.10.1996
(73) Patentinhaber: Lucas Industries Limited, West Midlands B90 4LA (GB)
(72) Erfinder: Gilles, Leo, 56077 Koblenz (DE); Gegalski, Helmut, 56218 Mühlheim-Kärlich (DE)
(74) Vertreter: Schmidt, Steffen J.

(56) Entgegenhaltungen:
- EP-A- 0 584 682
- EP-A- 0 592 212
- EP-A- 0 604 111
- EP-A- 0 673 805
- EP-A- 0 705 747
- WO-A-95/21758
- DE-A- 3 813 138
- DE-A- 4 225 358
- US-A- 5 137 455

## Beschreibung

Die Erfindung betrifft eine blockiergeschützte Bremsanlage für ein Fahrzeug mit einer in einem Gehäuse angeordneten elektronischen Steuerung, einem Ventilblock zur Aufnahme von elektromagnetischen Ventilen für die Steuerung von Hydraulikflüssigkeit in der Bremsanlage, und mit einem Pumpenmotor für eine Hydraulikflüssigkeit fördernde Pumpe, wobei das Gehäuse der Steuerung mit dem Ventilblock und dem Pumpenmotor verbunden ist, und wobei eine Wand des gehaüses an ihrer dem Ventilblock zugewanden Außenseite wenigstens eine Magnetspule für die elektromagnetischen Ventile in dem Ventilblock trägt, so dass die Wand des Gehäuses mit der wenigstens einen Magnetspule eine eigenstandig handhabbare Unterbaugruppe bildet.

Unter einer "blockiergeschützten Bremsanlage" ist hier ein Aggregat zu verstehen, das ein Blockieren gebremster Räder eines Fahrzeuges verhindert und gegebenenfalls auch ein Durchdrehen von angetriebenen Rädern (sogenannte Antriebsschlupfregelung-ASR). Ein solches Aggregat weist zumindest folgende Baugruppen auf: Eine elektronische Steuerung, die üblicherweise einen Rechner enthält, der in Abhängigkeit von gemessenen Daten (wie z.B. Verzögerungs- und Beschleunigungswerten der Räder) Befehle zum Steuern der Bremsanlage ableitet, einen Ventilblock, der insbesondere elektromagnetische Ventile für die Steuerung von Hydraulikflüssigkeit in der Bremsanlage aufnimmt, wobei die Ventile entsprechend den vom Rechner erzeugten Befehlen geöffnet bzw. geschlossen werden, und einen Pumpenmotor, der eine Pumpe antreibt, die Hydraulikflüssigkeit zum Hauptbremszylinder und/oder zu den Bremsen der Räder des Fahrzeuges fördert, falls die Ventile entsprechend eingestellt sind.

Die System-Baugruppen Ventilblock, Pumpe und Pumpenmotor werden häufig auch als "Hydraulikaggregat" bezeichnet.

Die vorliegende Anmeldung betrifft die Anordnung, Montage und Verbindung der zusammenwirkenden Baugruppen elektronische Steuerung, Ventilblock, Pumpenmotor und Pumpe.

Der Stand der Technik kennt eine Vielfalt von Anordnungen der genannten Baugruppen einer blockiergeschützten Bremsanlage. Verwiesen wird insbesondere auf die EP-A-O 105 219, DE-A-38 13 138 und DE-A-38 13 139.

Bei der aus der DE 88 15 427 U1 bekannten Druckregeleinheit ist eine Haube mit elektronischen Bauelementen bestückt und innerhalb der Haube ist eine Steckerplatte angeordnet, die mit Steckern von Elektromagnetventilen an einem Ventilblock zusammensteckbar sind. Die Elektromagnetventile sind dabei Bestandteile des Ventilblocks. Entweder sind die Elektromagnetventile durch eine Platte in dem Ventilblock gehalten (Fig. 1, 2) oder die Elektromagnetventile sind in dem Ventilblock lose aufgenommen und werden durch Aufsetzen der Haube in ihrer Stellung gehalten (Fig. 3, 4). Die Steckerplatte dient hier lediglich dazu, die elektrischen Kontakte zu den Elektromagnetventilen herzustellen.

Bei der aus der DE 41 00 967 A1 bekannten elektrohydraulischen Druckregelvorrichtung sind die Magnetspulen entweder über Halterungen in dem Gehäuse aufgenommen, wobei die Magnetspulen an einer Zwischenwand in dem Gehäuse befestigt sind, oder die Magnetspulen sind an einer Halteplatte befestigt, die über eine schnappverbindung in das Gehäuse eingerastet werden kann.

Die nachveröffentlichte EP 0 705 747 A1 offenbart eine elektronisch gesteuerte Hydraulikeinheit zur Verwendung in einer blockiergeschützten Fahrzeugbremsanlage, die eine in einem Gehäuse angeordnete elektronische Steuerung umfasst. Mit dem Gehäuse ist ein weiteres Gehäusebauteil verbunden, das Seitenwände sowie einen von den Seitenwänden radial nach innen ragenden Steg aufweist. Eine bedruckte Leiterplatte, die eine Mehrzahl von Magnetspulen zur Betätigung einer entsprechenden Anzahl von elektromagnetischen Ventilen eines Ventilblocks trägt, wird im montierten Zustand der Hydraulikeinheit von dem an dem weiteren Gehäusebauteil ausgebildeten Steg abgestützt und ist durch Verbindungsstifte an dem weiteren Gehäusebauteil befestigt. Zur elektrischen Verbindung einer Pumpe mit der elektronischen Steuerung ist an dem weiteren Gehäusebauteil ein Steckverbinder vorgesehen, der über ein externes Kabel mit der Pumpe verbunden ist.

Die EP 0 584 682 A2 beschreibt eine Drudcsteuereinheit für eine hydraulische Fahrzeugbremsanlage mit einer in einem Gehäuse angeordneten Steuerung, einer Mehrzahl von elektromagnetischen Ventilen sowie einem Pumpenmotor. Magnetspulen für die elektromagnetischen Ventile sind an einer einem Ventilblock und dem Pumpenmotor zugewandten Wand des Gehäuses befestigt. Zur elektrischen Verbindung des Pumpenmotors mit der elektronischen Steuerung ist eine Verbindungsleitung vorgesehen, die sich von einer Bürste des Pumpenmotors erstreckt und mit einer Leiterplatte der elektronischen Steuerung verbunden ist.

Die nachveröffentlichte WO 95/21758 betrifft eine blockiergeschützte Bremsanlage mit einer in einem Gehäuse angeordneten Steuerung, einem Ventilblock zur Aufnahme von elektromagnetischen Ventilen und einem Pumpenmotor. Magnetspulen für die Ventile sind in einem Zwischenkörper aufgenommen, der zwischen dem Ventilblock und dem Gehäuse der elektronischen Steuerung angeordnet ist.

Die EP 0 604 111 A2 beschreibt eine Hydraulikeinheit für eine blockiergeschützte Bremsanlage mit einem Gehäuse zur Aufnahme einer elektronischen Steuerung sowie einem weiteren Gehäuse, in dem eine Mehrzahl von elektromagnetischen Ventilen sowie ein Pumpenmotor angeordnet ist. Die elektromagnetischen Ventile sind an einer Grundplatte des weiteren Gehäuses befestigt.

Aus der EP 0 592 212 A2 ist ein Hydraulikaggregat für eine blockiergeschützte Fahrzeugbremsanlage bekannt, das einen auf einer Grundplatte angeordneten Ventilblock, einen mit dem Ventilblock verbundenen Pumpenmotor sowie eine an der Grundplatte seitlich benachbart zu dem Ventilblock befestigte elektronische Steuerung umfasst.

Die US 5,137,455 offenbart ein Hydraulikaggregat für ein ABS-System mit einem Pumpenmotor, an einem Ventilgehäuse befestigten Ventilen und einer in einem Gehäuse aufgenommenen elektronischen Steuerung.

Die DE 38 13 138 A1 beschreibt ein Ventilblockaggregat mit einer Mehrzahl von in einem Vendlaufnahmekörper angeordneten Elektromagnetventilen sowie einem Deckel, der als elektronischer Regler ausgebildet ist und mit dem Ventilblockaggregat eine integrale Baueinheit darstellt.

Die DE 42 25 358 A1 offenbart ein Hydroaggregat für ein hydraulisches Brems-Blockierschutz-System mit einem Pumpenmotor, einer Mehrzahl von in einem Gehäuseblock angeordneten Ventilen und einem Anbausteuergerät, das mit einer offenen Unterseite an einer dem Pumpenmotor gegenüberliegenden Seite des Gehäuseblocks anliegt.

Die nachveröffentlichte EP 0 673 805 A1 betrifft ein Hydraulikaggregat für ein ABS-System mit einer in einem Gehäuse angeordneten elektronischen Steuereinheit, einem Ventilblock mit einer Mehrzahl von darin angeordneten elektromagnetischen Ventilen sowie einem mit dem Ventilblock verbundenen Pumpenmotor.

Bei der räumlichen Anordnung der oben genannten Bauelemente und ihrer elektrischen und mechanischen Verbindung kommt es wesentlich darauf an, eine möglichst kompakte (raumsparen-de) Montage zu erreichen. Darüber hinaus sollen aber auch der elektrischen Verbindung dienende Leitungen (insbesondere Kabelbäume) hinsichtlich Umfang und Länge reduziert werden und es muß auch die Montage der Teile möglichst einfach sein. Auch soll die gesamte Anordnung mit möglichst wenig Bauteilen auskommen. Weiterhin soll die Verbindung der einzelnen Bauteile auch elektrisch und mechanisch sicher und wenig störanfällig sein. Der Gegenstand der vorliegenden Erfindung beinhaltet eine Verbesserung hinsichtlich all dieser technischen Probleme.

Die elektrische und mechanische Montage des Pumpenmotors gemäß dem Stand der Technik ist angesichts des oben genannten technischen Aufgabenkomplexes verbesserungswürdig. Dabei ist auch zu beachten, daß mit Blick auf die oben genannte mechanische und insbesondere elektrische Sicherheit der Montage und Verbindung der Baugruppen auch eine Abdichtung der die Bauteile umschließenden Gehäuse erforderlich ist, insbesondere eine Abdichtung gegen Feuchtigkeit, Schmutz etc.

Die EP-A-0 438 553 beschreibt einen Ventilblock, bei dem die Magnetspulen der Ventile auf einem gemeinsamen Kontaktträger zusammengefaßt sind, der auch gemeinsame Steckverbinder zum Verbinden der Magnetspulen mit der elektronischen Steuerung der Bremsanlage enthält. Eine Integration der elektrischen und mechanischen Montage des Pumpenmotors ist aber nicht vorgesehen.

Die Erfindung verbessert eine blockiergeschützte Bremsanlage der oben genannten Art mit Blick auf die genannten technischen Probleme durch die Merkmale des Patentanspruchs 1.

In den abhängigen Patentansprüchen sind bevorzugte Ausgestaltungen der blockiergeschützten Bremsanlage beschrieben.

Durch die erfindungsgemäße Ausgestaltung, die Magnetspulen für die elektromagnetischen Ventile in dem Ventilblock durch eine Wand des Gehäuses an ihrer dem Ventilblock zugewandten Außenseite tragen zu lassen, bildet diese Wand des Gehäuses eine Halteplatte für die Magnetspulen, wobei die Magnetspulen zusammen mit der Halteplatte eine eigenständig handhabbare Unterbaugruppe bilden. Dies hat den Vorteil, daß bei der Montage weniger einzelne Teile zusammengefügt werden müssen. Vielmehr können vormontierte Komponenten einzeln auf Funktion und Qualität geprüft werden, um anschließend die Gesamtmontage vorzunehmen. Die Kontrolle oder Wartung kann an der vormontierten Unterbaugruppe bestehend aus der Wand des Gehäuses mit den daran angebrachten Magnetspulen sehr einfach durchgeführt werden.

Vorzugsweise sind die Magnetspulen für die elektromagnetischen Ventile mit der Wand des Gehäuses durch ein elektrisch isolierendes Material verbunden, so daß die Wand des Gehäuses und die Magnetspulen - sowie ggf. die elektrischen Verbindungen für die Magnetspulen - eine komplette vergossene Einheit bilden.

Die elektrischen Verbindungen der Magnetspulen durchdringen die Wand des Gehäuses und sind entweder direkt oder über Steckverbinder mit der in dem Gehäuse angeordneten elektronischen Steuerung verbunden. Wenn die Wand des Gehäuses aus einem Material mit hoher Wärmeleitfähigkeit gebildet ist, wird eine Verbesserung im Wärmeableitverhalten von Verlustwärme aus dem Inneren des Gehäuses der elektronischen Steuerung erreicht. Dies ist insofern von Bedeutung, da die elektronische Steuerung in der Regel im Motorraum des Kraftfahrzeuges angeordnet ist, wo zum Teil hohe Temperaturen herrschen. Darüber hinaus können durch diese Gestaltung separat ausgebildete Kühlkörper eingespart werden, was zur Miniaturisierung und Gewichtsverringerung der Gesamtanordnung beiträgt.

Die Wand des Gehäuses an ihrer dem Ventilblock abgewandten Innenseite als Kühlfläche eines Verlustwärme abgebenden elektronischen Bauteils ausgebildet. An dieser Kühlfläche kann das Bauelement dann formschlüssig angebracht werden. Insbesondere wenn die elektronische Steuerung als Hybrid-Bauelement ausgeführt ist, besteht die Notwendigkeit, die Verlustwärme aus den Leistungsbauteilen (z.B. den Bauteilen für die Leistungsansteuerung der Magnetspulen der Steuerventile) aus dem Gehäuse abzuführen. Dies kann durch die erfindungsgemäß vorgeschlagene Anordnung besonders einfach erreicht werden.

Wenn die Wand des Gehäuses an dem Pumpenmotor und/oder dem Ventilblock mittels eines Dämpferkammerstopfens befestigt ist, wird eine sehr effiziente Montage deshalb erreicht, weil damit eine separate Halterung der Wand des Gehäuses - und damit des gesamten Gehäuses - entfallen kann.

Zusätzlich oder an Stelle der Befestigung der Wand des Gehäuses mittels des Dämpferkammerstopfens kann die Wand des Gehäuses an den Pumpenmotor und/oder den Ventilblock auch mittels Halteklammern erfolgen. Die Halteklammern können so gestaltet sein, daß eine Haltekante an dem Ventilblock und/oder dem Pumpenmotor vorgesehen ist, an der die Halteklammer formschlüssig eingreifen kann. Vorzugsweise sind an der Halteplatte mehrere Arme (einstückig) oder als separate Bauteile angeformt, die jeweils an ihrem freien Ende eine Kralle zur Halterung an dem Ventilblock und/dem Pumpenmotor aufweisen. Dies hat auch den Vorteil, daß durch die Wand des Gehäuses die Einzelteile der Ventile in dem Ventilblock gesichert sind.

Vorzugsweise ist das Gehäuse der elektronischen Steuerung aus einem schlagzähen und temperaturbeständigen Kunststoff hergestellt. Die Wand des Gehäuses kann mit dem Gehäuse form- oder materialschlüssig verbunden sein, um eine staubdichte und/oder hermetische Verbindung zu erzielen. Diese form- oder materialschlüssige Verbindung kann entweder durch eine entsprechende Verrastung der Wand des Gehäuses mit dem übrigen Gehäuse erreicht werden, oder durch Verkleben, Verschweißen oder Vergießen der Wand des Gehäuses mit dem übrigen Gehäuse.

Um eine möglichst stoßsichere und vibrationsunanfällige Gesamtanordnung zu erzielen ist es vorteilhaft, das Innere des Gehäuses vollständig mit einer elektrisch isolierenden elastischen Masse auszufüllen.

Erfindungsgemäß ist ein die elektronische Steuerung mit dem Pumpenmotor verbindender Steckverbinder durch eine Öffnung in der Wand des Gehäuses diese durchdringend vorgesehen, wobei die Wand durch die Öffnung in zwei Bereiche geteilt ist. Damit entstehen zwei insbesondere im Hinblick auf mechanische Schwingungen (fast) vollständig entkoppelte Bereiche, was für die Funktion der Wand als Kühlkörper für elektronische Bauteile wichtig ist. Da die Halterung der Wand des Gehäuses über den Dämpferkammerstopfen an dem Ventilblock in dem einen Bereich der Wand erfolgt, ist der andere Bereich gegen die mechanischen Schwingungen z.B. bei Schaltspielen der Ventile in dem Ventilblock weitgegend freigestellt. Damit kann dieser freigestellte Bereich als Kühlkörper optimal eingesetzt werden. Biegespannungen, die aus der Abstützung der Ventileinrichtungen gegen die Wand des Gehäuses in dem einen Bereich resultieren, können auf den anderen Bereich der Wand nicht übertragen werden. Damit sind auch Beschädigungen von an der Wand in diesem Bereich angebrachter elektronischer Bauelemente verhindert. Auch dazu ist die als Kühlfläche eines Verlustwärme abgebenden elektronischen Bauteils ausgebildete Innenfläche so aufgeteilt, daß einzelne daran angebrachte Bauteile sich jeweils nur in einem der beiden Bereiche befinden.

Nachfolgend wird ein Ausführungsbeispiel der Erfindung anhand der Zeichnung näher erläutert. Es zeigen:

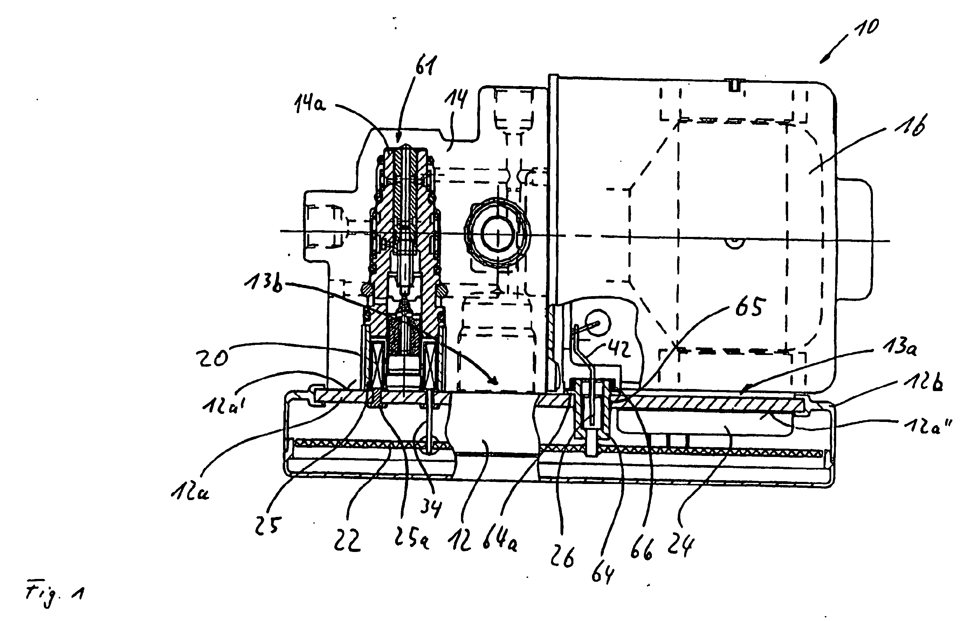

- Fig. 1: schematisch eine Seitenansicht der hier interessierenden Baugruppen einer blockiergeschützten Bremsanlage, teilweise im Schnitt;

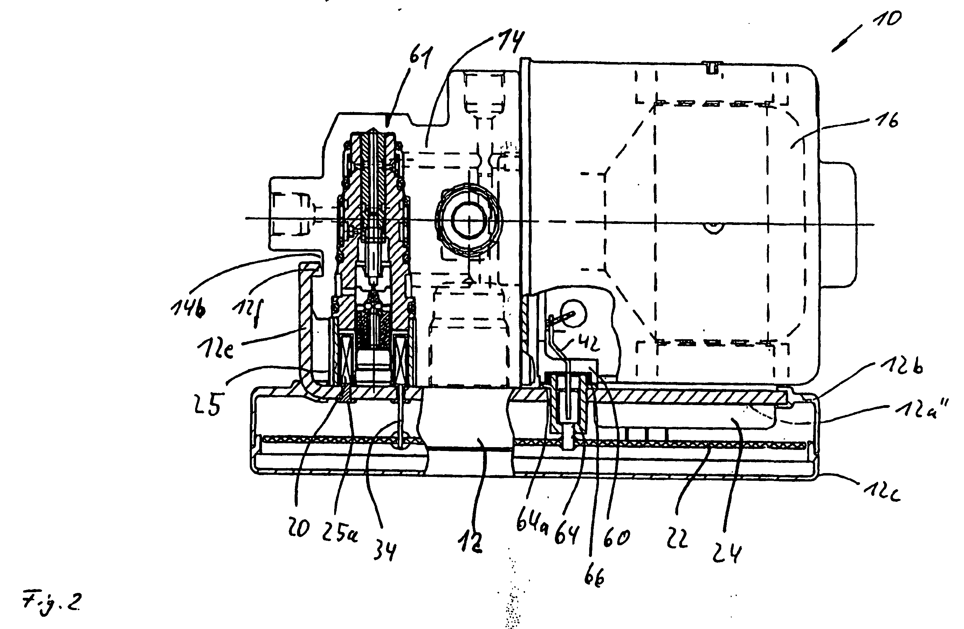

- Fig. 2: eine Draufsicht auf eine zweite Ausführungsform einer Halterung des Gehäuses an dem Ventilblock, teilweise geschnitten;

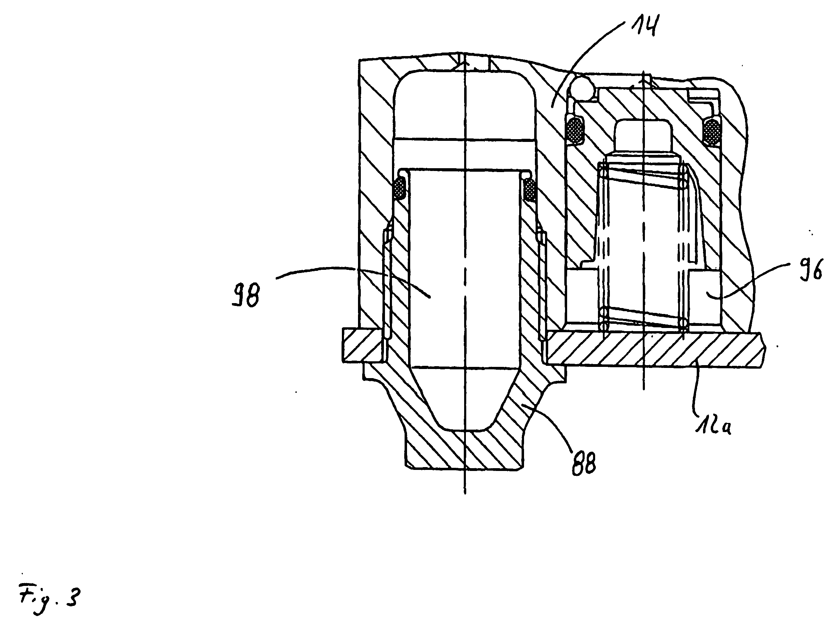

- Fig. 3: eine Seitenansicht einer Ausführungsform für eine Halterung des Gehäuses an dem Pumpenmotor mittels eines Dämpferkammerstopfens in einer vergrößerten schematischen teilweise geschnittenen Seitenansicht; und

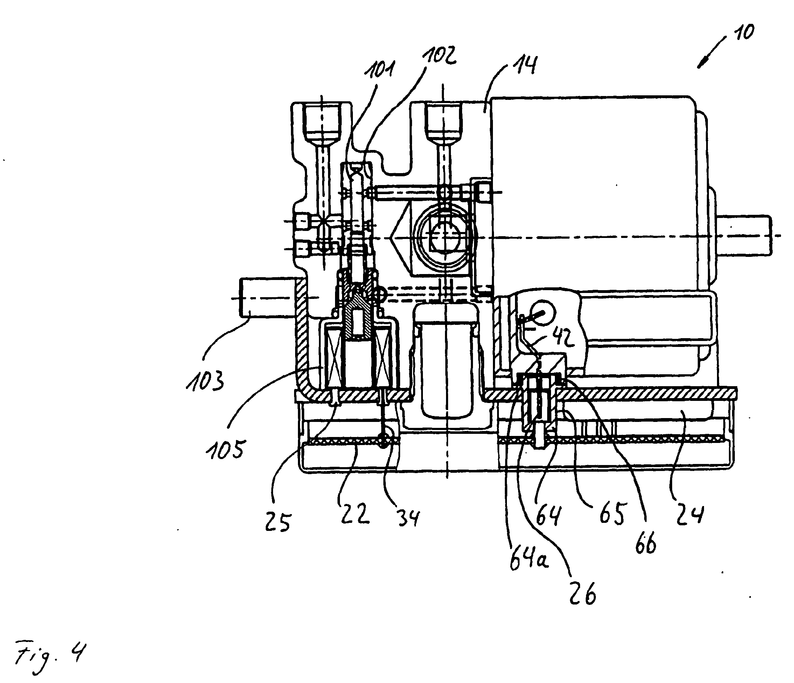

- Fig. 4: eine Draufsicht auf eine dritte Ausführungsform einer Halterung des Gehäuses an dem Ventilblock, teilweise geschnitten.

Die Fig. 1 zeigt ein Aggregat 10 mit den nachfolgenden Baugruppen einer blockiergeschützten Bremsanlage:

Einer in einem Gehäuse 12 aufgenommenen elektronischen Steuerung der Bremsanlage, wobei die elektronische Steuerung hier nur durch eine Leiterplatte 22 und symbolisch durch ein Schaltungselement 24 angedeutet ist. Einem Ventilblock 14, der die für eine blockiergeschützte Bremsanlage (ggf. mit ASR) erforderlichen elektromagnetischen Ventile 14a und zugehörige Leitungsteile (die mit einzelnen Radbremsen des Fahrzeugs - nicht gezeigt - verbunden werden) aufnimmt. Und einen Pumpenmotor 16, der eine Pumpe betätigt, die Hydraulikflüssigkeit in an sich bekannter Weise zum Hauptbremszylinder und/oder zu den Radbremsen (nicht gezeigt) fördert.

Das Gehäuse 12 ist durch eine dem Ventilblock 14 und dem Pumpenmotor 16 zugewandte Wand 12a, einen die Wand 12a umgebenden oberen Rand 12b und eine Unterschale 12c gebildet. Die Wand 12a ist mit ihrer dem Ventilblock 14 und dem Pumpenmotor 16 zugewandten Außenseite 12a' dicht an dem Ventilblock 14 bzw. dem Pumpenmotor 16 anliegend angebracht. Die Wand 12a besteht aus einem Material mit hoher Wärmeleitfähigkeit, z. B. Aluminium und weist mehrere Durchbrüche für Verbindungsleitungen 34 bzw. Steckverbinder 64 auf. An ihrer Innenseite 12a" ist die Wand 12 als Anlagefläche für ein (Hybrid-)Bauelement 24 ausgebildet, für das die Wand 12a als Kühlkörper dient. An ihrer Außenseite 12a' trägt die Wand 12a des Gehäuses 12 Magnetspulen 20 für die elektromagnetischen Ventile 14a in dem Ventilblock 14. Diese Magnetspulen 20 sind mit der Wand 12a, die als Halteplatte für diese Magnetspulen 20 dient, mittels einer elektrisch isolierenden Vergußmasse 25 zu einer eigenständig handhabbaren Unterbaugruppe vergossen. Zur zusätzlichen Stabilisierung der Magnetspulen 20 gegenüber der Wand 12a können die Magnetspulen 20 mittels Klebezapfen 25a, die durch Durchbrüche in der Wand 12a ragen, an dieser befestigt sein.

Der Steckverbinder 64 ragt ebenfalls durch die Wand 12a im Bereich des Pumpenmotors 16 hindurch und kontaktiert über eine Kontaktklemme 26 und eine Leitung 42 die elektrischen Anschlüsse des Pumpenmotors 16. Der Steckverbinder 64 weist an der Außenseite 12a' der Wand 12a einen umlaufenden Steg 64a auf, der eine Dichtung 66 haltert, um Umwelteinflüsse von dem Inneren des Gehäuses 12 fernzuhalten.

Fig. 2 zeigt eine weitere Ausführungsform des Gehäuses 12 bzw. dessen Befestigung an dem Ventilbock 14 und dem Pumpenmotor 16. Wie in Fig. 2 zu sehen ist, weist die Wand 12a im Bereich des Ventilblocks 14 eine senkrecht aus der Ebene der Wand 12a abgewinkelte Kralle 12e auf, die an ihrem freien Ende einen Fortsatz 12f aufweist, der in eine entsprechende Ausnehmung 14b in dem Ventilblock 14 eingreift und damit das Gehäuse 12 gegen den Ventilblock 14 bzw. den Pumpenmotor 16 verspannt.

Fig. 3 zeigt den Querschnitt durch eine Expanderkammer 96 und eine Dämpferkammer 98 mit darin eingesetztem Dämpferkammerstopfen 88. Die Wand 12a ist mit dem Ventilblock 14 durch den Dämpferkammerstopfen 88 fest gegen den Ventilblock 14 geschraubt. Die in Fig. 2 gezeigte zusätzliche Halterung des Gehäuses 12 an dem Ventilblock 14 über die Kralle 12e in der Ausnehmung 14a stellt eine vibrationsunempfindliche und besonders sichere mechanische Befestigung des Gehäuses 12 an dem Ventilblock 14 her.

Wie in Fig. 1 gezeigt ist, ragt der die elektronische Steuerung 22, 24 mit dem Pumpenmotor 16 verbindende Steckverbinder 64 derart durch eine Öffnung 65 in der Wand 12a des Gehäuses 12, daß die Wand 12a durch die Öffnung 65 in zwei Bereiche 13a, 13b geteilt ist. Dadurch ist die als Kühlfläche eines Verlustwärme abgebenden elektronischen Bauteils 24 ausgebildete Innenfläche 12a" der Wand 12a des Gehäuses 12 so aufgeteilt, daß einzelne daran angebrachte Bauteile sich jeweils nur in einem der beiden Bereiche 13a, 13b (in Fig. 1 rechts) befinden.

Die in den Fig. 1 und 2 dargestellten Anordnungen ermöglichen auch insofern eine einfachere Montage, als die Ventilanordnung 14a in dem Ventilblock 14 einfach in die entsprechende Ausnehmung eingebracht werden kann und anschließend durch die Befestigung der Wand 12a mit den daran vergossenen Magnetspulen 20 mechanisch völlig festgelegt ist. Diese überaus einfache und sowohl Bauteile als auch Montagezeit sparende Anordnung hat den Vorteil, daß einzelnen Bauteilen mehrere Funktionen zugewiesen sind. So dient die Wand 12a einerseits als Wand des Gehäuses 12, andererseits als Kühlkörper für das elektronische Bauteil 24. Außerdem bildet die Wand 12a zusammen mit den Magnetspulen 20 eine vormontierte getrennt handhabbare Baueinheit, die mit dem Ventilblock 14 verschraubbar (über den Dämpferkammerstopfen 88) verschraubbar oder verrastbar (über die Kralle 12e und die Ausnehmung 14b) verrastbar ist und dabei überdies dafür sorgt, daß die Ventilbaugruppe 14e in dem Ventilblock 14 korrekt montiert und gehalten ist.

Die in Fig. 4 gezeigte dritte Ausführungsform unterscheidet sich von den in Fig. 1 und 2 dargestelten Ausführungen in erster Linie durch den Wegfall der Hülse 100 der Ventilbaugruppe 61, so daß das Ventilelement 101 in der Bohrung 102 des Ventilblocks 14 verschiebbar aufgenommen ist. Dadurch ergibt sich zum einen der Vorteil, daß durch Wegfall von Bauelementen Kosten eingespart werden, zum anderen der Ventilblock 14 kompakter auszuführen ist, so daß Einbauraum eingespart wird. Außerdem ist bei dieser Ausführungsform die Anzahl der ringförmigen Dichtungen reduziert, was ebenfalls zur Kosteneinsparung beiträgt.

Des weiteren ist bei der Ausführung gemäß Fig. 4 gegenüber Fig. 2 der abgewinkelte Bereich der Wand 12a an dem Ventilblock 14 mittels eines Schraubelementes 103 befestigt, so daß die Ausnehmung 14a am Ventilblock 14 sowie die Kralle 12e der Wand 12a entfallen können. Es ist auch möglich das Schraubelement 103 gleichfalls als Befestigungs-/Haltemittel mitzuverwenden, um das Aggregat 10 im Fahrzeug zu befestigten.

Für alle drei Ausführungsformen gilt, daß die Magnetspulen 20 der Ventilbaugruppe 61 in einem zylinderförmigen Aufnahmeelement 105 aufgenommen sind, das als einfaches Blechformteil ausführbar ist. Außerdem ist bei allen drei Ausführungsformen ein Toleranzausgleich zwischen den durch die Wand 12a getragenen Magnetspulen 20 und dem zylinderförmigen Aufnahmeelement 105 der Ventilbaugruppe 61 nicht notwendig, da sich die Ventilbaugruppe 61 über das zylinderförmige Aufnahmeelement 105 an der Wand 12a hydraulisch abstützt. Dadurch können elastische Verbindungsmittel entfallen. Weiterhin erstreckt sich bei allen drei Ausführungsformen der bei Bestromung der Magnetspulen 20 zur Betätigung der Ventilbaugruppe 61 aufgebaute magnetische Kreis über das zylindrische Aufnahmeelement 105 und die Wand 12a. Schließlich kann bei den drei Ausführungsformen alternativ oder zusätzlich zu der Öffnung in der Wand 12a, die dazu dient die Wand 12a in zwei mechanisch entkoppelte Bereiche zu unterteilen, eine Entlastungsnut oder Kerbung an der Teilungslinie vorgesehen sein.

## Patentansprüche

1. Hydraulikaggregat für eine blockiergeschützte Fahrzeugbremsanlage mit
- einer in einem Gehäuse (12) angeordneten elektronischen Steuerung (22, 24),
- einem Ventilblock (14) zur Aufnahme von elektromagnetischen Ventilen für die Steuerung-von Hydraulikflüssigkeit in der Bremsanlage, und mit
- einem Pumpenmotor (16) für eine Hydraulikflüssigkeit fördernde Pumpe,
- wobei das Gehäuse (12) der Steuerung (22, 24) mit dem Ventilblock (14) und dem Pumpenmotor (16) verbunden ist, und wobei
- eine Wand (12a) des Gehäuses (12) an ihrer dem Ventilblock (14) zugewandten Außenseite (12a') wenigstens eine Magnetspule (20) für die elektromagnetischen Ventile in dem Ventilblock (14) trägt, so daß die Wand (12a) des Gehäuses (12) mit der wenigstens einen Magnetspule (20) eine eigenständig handhabbare Unterbaugruppe bildet, **dadurch gekennzeichnet, daß** die Wand (12a) des Gehäuses (12) an ihrer dem Ventilblock (14) abgewandten Innenseite (12a") als Kühlfläche eines Verlustwärme abgebenden elektronischen Bauteils (24) ausgebildet ist und daß ein die elektronische Steuerung (22, 24) mit dem Pumpenmotor (16) verbindender Steckverbinder (64) im Bereich des Pumpenmotors (16) durch eine Öffnung in der Wand (12a) des Gehäuses (12) ragt.

2. Hydraulikaggregat für eine Fahrzeugbremsanlage nach Anspruch 1, **dadurch gekennzeichnet, daß** die Magnetspulen (20) für die elektromagnetischen Ventile mit der Wand (12a) des Gehäuses (12) mittels eines elektrisch isolierenden Materials (25) verbunden sind.

3. Hydraulikaggregat für eine Fahrzeugbremsanlage nach Anspruch 1 oder 2, **dadurch gekennzeichnet, daß** die Wand (12a) des Gehäuses (12) mit den Magnetspulen (20) und elektrischen Verbindungen (43) zu einer Einheit vergossen sind.

4. Hydraulikaggregat für eine Fahrzeugbremsanlage nach Anspruch 3, **dadurch gekennzeichnet, daß** die elektrischen Verbindungen (43) die Wand (12a) des Gehäuses (12) durchdringen.

5. Hydraulikaggregat für eine Fahrzeugbremsanlage nach einem der Ansprüche 1 bis 4, **dadurch gekennzeichnet, daß** die Wand (12a) des Gehäuses (12) aus einem Material mit hoher Wärmeleitfähigkeit gebildet ist.

6. Hydraulikaggregat für eine Fahrzeugbremsanlage nach einem der Ansprüche 1 bis 5, **dadurch gekennzeichnet, daß** die Wand (12a) des Gehäuses (12) an dem Pumpenmotor (16) und/oder dem Ventilblock (14) mittels eines Dämpferkammerstopfens (88) befestigt ist.

7. Hydraulikaggregat für eine Fahrzeugbremsanlage nach einem der Ansprüche 1 bis 6, **dadurch gekennzeichnet, daß** die Wand (12a) des Gehäuses (12) an dem Pumpenmotor (16) und/ oder dem Ventilblock (14) mittels Halteklammern (12e, 12f) befestigt ist.

8. Hydraulikaggregat für eine Fahrzeugbremsanlage nach einem der Ansprüche 1 bis 7, **dadurch gekennzeichnet, daß** das Gehäuse (12) zumindet teilweise aus einem vorzugsweise schlagzähen und temperaturbeständigen Kunststoff hergestellt ist.

9. Hydraulikaggregat für eine Fahrzeugbremsanlage nach einem der Ansprüche 1 bis 8, **dadurch gekennzeichnet, daß** das Gehäuse (12) mit der Wand (12a) des Gehäuses (12) form- oder materialschlüssig verbunden ist.

10. Hydraulikaggregat für eine Fahrzeugbremsanlage nach einem der Ansprüche 1 bis 9, **dadurch gekennzeichnet, daß** das Innere des Gehäuses (12) vollständig mit einer elektrisch isolierenden vorzugsweise elastischen Masse (25) ausgefüllt ist.

11. Hydraulikaggregat für eine Fahrzeugbremsanlage nach einem der Ansprüche 1 bis 10, **dadurch gekennzeichnet, daß** die als Kühlfläche eines Verlustwärme abgebenden elektronischen Bauteils (24) ausgebildete Innenfläche (12a") so aufgeteilt ist, daß einzelne daran angebrachte Bauteile sich jeweils nur in einem der beiden Bereiche (13a, 13b) befinden, in die die Wand (12a) durch die Öffnung (65) zur Hindurchführung des die elektronische Steuerung (22, 24) mit dem Pumpenmotor (16) verbindenden Steckverbinders (64) geteilt ist.

## Claims

1. A hydraulic power unit for a block-protected vehicle braking system, comprising
- an electronic controller (22, 24) arranged in a housing (12);
- a valve block (14) for accommodating solenoid valves for controlling hydraulic fluid in the braking system; and
- a pump motor (16) for a pump delivering hydraulic fluid,
- in which the housing (12) of the controller (22, 24) is connected to the valve block (14) and the pump motor (16), and in which
- a wall (12a) of the housing (12) at its outer surface (12a') facing the valve block (14) carries at least one solenoid (20) for the solenoid valves in the valve block (14) so that the wall (12a) of the housing (12) together with the at least one solenoid (20) forms a subassembly that can be handled individually,
**characterized in that** the wall (12a) of the housing (12) at its inner surface (12a") facing away from the valve block (14) is formed as cooling surface of an electronic component (24) emitting dissipated heat and that a connector (64) connecting the electronic controller (22, 24) to the pump motor (16) projects in the region of the pump motor (16) through an opening in the wall (12a) of the housing (12).

2. The hydraulic power unit for a vehicle braking system according to Claim 1, **characterized in that** the solenoids (20) for the solenoid valves are joined with the wall (12a) of the housing (12) by means of an electrically insulating material (25).

3. The hydraulic power unit for a vehicle braking system according to Claim 1 or 2, **characterized in that** the wall (12a) of the housing (12) with the solenoids (20) and electrical connections (34) are potted to form one unit.

4. The hydraulic power unit for a vehicle braking system according to Claim 3, **characterized in that** the electrical connections (43) penetrate the wall (12a) of the housing (12).

5. The hydraulic power unit for a vehicle braking system according to one of Claims 1 to 4, **characterized in that** the wall (12a) of the housing (12) is made from a material with high heat conductivity.

6. The hydraulic power unit for a vehicle braking system according to one of Claims 1 to 5, **characterized in that** wall (12a) of the housing (12) is secured to the pump motor (16) and/or the valve block (14) by means of a dampening chamber plug (88).

7. The hydraulic power unit for a vehicle braking system according to one of Claims 1 to 6, **characterized in that** the wall (12a) of the housing (12) is secured to the pump motor (16) and/or the valve block (14) by means of holding brackets (12e, 12f).

8. The hydraulic power unit for a vehicle braking system according to one of Claims 1 to 7, **characterized in that** the housing (12) is made at least partially from a preferably impact and temperature resistant plastic material.

9. The hydraulic power unit for a vehicle braking system according to one of Claims 1 to 8, **characterized in that** the housing (12) is connected with the wall (12a) of the housing (12) in a positive and integral manner.

10. The hydraulic power unit for a vehicle braking system according to one of Claims 1 to 9, **characterized in that** the interior of the housing (12) is completely filled with an electrically insulating, preferably elastic mass (25).

11. The hydraulic power unit for a vehicle braking system according to one of Claims 1 to 10, **characterized in that** the inner surface (12a") formed as cooling surface of an electronic component (24) emitting dissipated heat is divided in such a manner that individual components attached thereto are in each case located in only one of the two areas (13a, 13b) into which the wall (12a) is divided by the opening (65) for the passage of the connector (64) connecting the electronic controller (22, 24) to the pump motor (16).

## Revendications

1. Agrégat hydraulique pour une installation de freinage de véhicule protégée contre un blocage, comportant
- une commande électronique (22, 24) disposée dans un boîtier (12),
- un bloc à soupapes (14) pour recevoir des soupapes électromagnétiques pour la commande de liquide hydraulique dans l'installation de freinage, et
- un moteur de pompe (16) pour une pompe fournissant du liquide hydraulique,
- le boîtier (12) de la commande (22, 24) étant relié au bloc à soupapes (14) et au moteur de pompe (16), et
- une paroi (12a) du boîtier (12) portant, sur sa face externe (12a') tournée vers le bloc à soupapes (14), au moins une bobine magnétique (20) pour les soupapes électromagnétiques dans le bloc à soupapes (14), de telle façon que la paroi (12a) du boîtier (12) forme, avec la au moins une bobine magnétique (20), un sous-groupe de construction manipulable indépendamment,
**caractérisé en ce que**
la paroi (12a) du boîtier (12) est, sur sa face intérieure (12a") opposée au bloc à soupapes (14), réalisée sous la forme d'une surface de refroidissement d'un composant électronique (24) émettant de la chaleur perdue, et **en ce qu'**un raccord de liaison par enfichage (64), reliant la commande électronique (22, 24) au moteur de pompe (16), dépasse, dans la zone du moteur de pompe (16), par une ouverture dans la paroi (12a) du boîtier (12).

2. Agrégat hydraulique pour une installation de freinage de véhicule suivant la revendication 1, **caractérisé en ce que** les bobines magnétiques (20) pour les soupapes électromagnétiques sont reliées à la paroi (12a) du boîtier (12) au moyen d'un matériau isolant électriquement (25).

3. Agrégat hydraulique pour une installation de freinage de véhicule suivant la revendication 1 ou 2, **caractérisé en ce que** la paroi (12a) du boîtier (12), avec les bobines magnétiques (20) et les liaisons électriques (34), sont coulées pour former une unité.

4. Agrégat hydraulique pour une installation de freinage de véhicule suivant la revendication 3, **caractérisé en ce que** les liaisons électriques (43) traversent la paroi (12a) du boîtier (12).

5. Agrégat hydraulique pour une installation de freinage de véhicule suivant l'une des revendications 1 à 4, **caractérisé en ce que** la paroi (12a) du boîtier (12) est constituée par un matériau hautement conducteur de la chaleur.

6. Agrégat hydraulique pour une installation de freinage de véhicule suivant l'une des revendications 1 à 5, **caractérisé en ce que** la paroi (12a) du boîtier (12) est fixée sur le moteur de pompe (16) et/ou sur le bloc à soupapes (14) au moyen d'un bouchon de chambre d'amortissement (88).

7. Agrégat hydraulique pour une installation de freinage de véhicule suivant l'une des revendications 1 à 6, **caractérisé en ce que** la paroi (12a) du boîtier (12) est fixée sur le moteur de pompe (16) et/ou sur le bloc-soupapes (14) au moyen de pinces de retenue (12e, 12f).

8. Agrégat hydraulique pour une installation de freinage de véhicule suivant l'une des revendications 1 à 7, **caractérisé en ce que** le boîtier (12) est réalisé, au moins en partie, dans une matière plastique, de préférence résistante aux chocs et résistante aux hautes températures.

9. Agrégat hydraulique pour une installation de freinage de véhicule suivant l'une des revendications 1 à 8, **caractérisé en ce que** le boîtier (12) est relié à la paroi (12a) du boîtier (12) par conjugaison de forme ou de matière.

10. Agrégat hydraulique pour une installation de freinage de véhicule suivant l'une des revendications 1 à 9, **caractérisé en ce que** l'intérieur du boîtier (12) est complètement rempli d'une masse isolante électrique (25), de préférence, élastique.

11. Agrégat hydraulique pour une installation de freinage de véhicule suivant l'une des revendications 1 à 10, **caractérisé en ce que** la face intérieure (12a") réalisée sous la forme d'une surface de refroidissement d'un composant électronique (24) émettant de la chaleur perdue, est partagée de telle façon que différents composants connectés sur elle se trouvent chacun seulement dans une des deux zones (13a, 13b), suivant lesquelles la paroi (12a) est divisée par l'ouverture (65) pour la traversée du raccord de liaison par enfichage (64), reliant la commande électronique (22, 24) au moteur de pompe (16).
